# EUROPEAN PATENT APPLICATION

(11) **EP 0 661 472 A1**
(43) Date of publication of application: **05.07.1995**
(21) Application number: 94203380.4
(22) Date of filing: 21.11.1994
(51) Int. Cl.: F16C 33/66, F16C 33/78

(54) **Roller bearing and seal for this roller bearing**

(30) Priority: 28.12.1993 NL 9302273
(71) Applicant: SKF Industrial Trading & Development Co, B.V., NL-3430 DT Nieuwegein (NL)
(72) Inventor: Bras, Johan Christian Marinus, NL-4196 AZ Tricht (NL)
(74) Representative: Kupecz, Arpad

(57) **Abstract**

The invention describes a roller bearing (1) having an extended operational life, whereby the bearing comprises a seal (4), which seal (4) is provided with lubricating grease retaining means. These lubricant-retaining means (12) can have a variety of forms and they prevent lubricating grease from coming into contact with the rotating bodies or the races of the bearing (1), for instance due to vibration, during operation of the bearing. Thus sharp rises in temperature and loss of lubricating grease are avoided, which would shorten the operational life of the bearing. Preferably the bearing (1) comprises a seal of which the means for the retention of the lubricant are formed of plastic. The invention also relates to a seal provided with means for the retention of lubricant.

## Description

The present invention relates to a roller bearing comprising an inner race ring and an outer race ring, which race rings are positioned concentric in relation to each other, wherein at least one of the race rings is in contact with the seal, said seal, together with the race rings defining a space, rotating bodies being mounted within said space between the race rings, and the space in the bearing further being provided with oil-containing lubricating grease.

Such a bearing is known from the prior art. During assembly the roller bearing is lubricated and is sealed for its mechanical life span by means of the seal. The mechanical life time of the roller bearing is determined by the initial amount of lubricating grease and by ambient factors. The optimal lubrication charge is determined by the manufacturer of the bearing and depends on the interaction between all bearing components such as the cage, the lubricating grease and the seals. The optimal lubrication charge is usually determined experimentally by optimizing at the lowest operating temperature with a maximised amount of lubricating grease in the bearing. The lubricating grease is located against a wall of the space and is not in contact with the rotating bodies. If, after some time, lubrication of the bearing declines, the temperature will rise causing the oil-containing lubricant to release oil. The oil lubricates the bearing. Vibration during operation may cause the lubricating grease to come off the wall of said space in the bearing. If during operation lubricating grease comes loose in the bearing and comes into contact with the rotating bodies in an uncontrolled manner, the temperature in the bearing will rise, shortening the operational life of the bearing and possibly thereby causing lubricating grease to be forced past the seals and out of the bearing.

It is the object of the invention to provide either a bearing which has a longer operational life, or a bearing having a long operational life even if cheaper, lower grade grease is used.

In order to achieve this object the invention provides a bearing which is characterized in that the seal comprises means extending into said space for the retention of the lubricating grease.

The means extending into said space effectively retain the lubricating grease, allowing the amount of lubricating grease in the bearing to be increased and thus extending the operational life, while avoiding the risk of undesired contact between the grease and the roller bearings. The fact that the lubricating grease is retained better also allows the use of a lubricating grease with a less precisely determined consistency, which is economically advantageous.

The bearing according to the invention is preferably characterized in that the means for the retention of the lubricating grease are made of plastic.

Plastic means can be manufactured cheaply in a variety of shapes. Thus it is easy to provide a bearing adapted to the lubricating grease used and to the operating conditions and having a long operational life.

Advantageously, the means for the retention of the lubricating grease are characterized in that they comprise a rim extending substantially circumferentially, which is discontinuous or continuous and pointing inward. Likewise, the means for the retention of lubricating grease may advantageously comprise a number of projecting elements distributed over the circumference with a radial component.

Such means are suitable for the effective retention of lubricating grease.

One favoured embodiment of the bearing according to the invention is characterized in that the rim which is pointing inward and the projecting elements together form cavities.

Such cavities are very suitable for the retention of lubricating grease and contribute greatly in preventing undesired amounts of grease from coming into contact with the roller bearings.

The invention also relates to a seal to be used in the bearing described above.

The invention will now be further elucidated with reference to the drawing representing embodiments of the invention.

Fig. 1 is an axial cross-section of a bearing according to the invention.

Fig. 2 and Fig. 3 each show very schematically in four quadrants (a-d) of a frontal view, four different embodiments of seals for use in a bearing according to the invention.

Fig. 4 to 7 are partial axial cross-sections of seals that can be used for the bearing according to the invention.

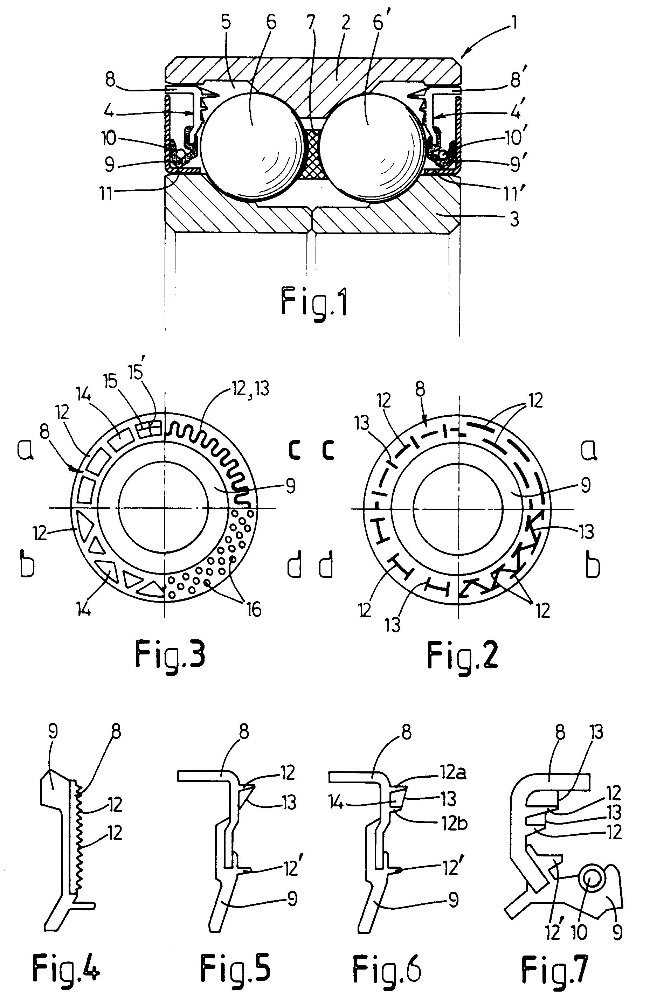

Fig. 1 shows a bearing 1 according to the invention consisting in this case of a double row deep groove ball bearing. The bearing 1 comprises an outer race ring 2 and an inner race ring 3, as well as a first seal 4 and a second seal 4'. The inner and outer race rings 2 and 3 and the seals 4 and 4' define a space 5 in which the rotating bodies 6, 6' are mounted. The rotating bodies are kept at a distance from each other by a cage 7. The seal 4 (resp. 4') mounted on the static outer race ring 2 comprises a form-retaining part 8 (resp. 8') lending form stability and a sealing, elastic part 9 (resp. 9'). An annular spring 10, 10' is mounted in the sealing, elastic part 9, 9' providing a radial force so that the sealing, elastic part 9, 9' can fulfil its function. The sealing, elastic part 9, 9' presses against the ring 11, 11' which forms the counter surface rotationally connected to the inner race ring 3.

The seal comprises plastic moulded means projecting into the space 5 for the retention of the oil-containing lubricating grease. While the bearing is in operation the races of the outer and inner race rings 2 and 3 and the rotating bodies 6, 6' are lubricated by the oil released by the lubricating grease. If, due to the decrease of lubricating oil between the rotating bodies 6, 6' and the race rings 2, 3 their temperature rises, oil is released from the oil-containing lubricating grease, and the bearing again attains its well-lubricated state. Due to the disappearance of oil from the races the operational life of the bearing is determined by the amount of oil present in the bearing and thus the amount of oil-containing lubricating grease. The plastic moulded means projecting into the space for the retention of the lubricant increase the amount of lubricant that can be retained in the space, without the lubricant coming onto the races due to, for instance vibration. If this should happen, the temperature in the bearing would rise sharply, and oil and lubricating grease would be forced out of the bearing, shortening the operational life of the bearing. Consequently, increasing the amount of lubrication in the bearing and ensuring that this does not suddenly come onto the races, can safeguard a long operational life for the bearing according to the invention.

The means for the retention of the lubricant can come in a variety of suitable forms. Figs. 2 and 3 show schematically eight examples of suitable forms for the retention of lubricant by means formed at the seal. Fig. 2a shows discontinuous rims 12 extending circumferentially, axially projecting inward after assembly of the bearing 1. The quadrant of Fig. 2b shows a seal of which the rims 12 comprise zig-zag-like projecting elements extending over the circumference with a radial part 13. The quadrants of seals illustrated in Fig. 2c and 2d have discontinuous rims 12 and projecting radial elements 13 distributed over the circumference.

In Fig. 3a and 3b the rims 12 and the projecting elements with radial part 13 distributed over the circumference are thick so that cavities 14 are formed. These cavities 14 retain lubricating grease taken up into them. If desired these cavities can comprise further rims and elements with a radial part, substantially extending circumferentially, as shown in Fig. 3a. These surface-enlarging structures have the reference numbers 15 and 15' and ensure a further improvement of the lubricant-retaining capacity.

In the quadrant of the seal 4 shown in Fig. 3c the rim 12 and the projecting elements 13 together form an undulating structure. In Fig. 3d the rims 12 and the projecting elements with the radial part 13 form pegs 16.

In those cases where the seal is not connected with a cage 7 or cage member, the means for the retention of lubricant only project into the part of the space 5 outside the circumferential projection of the rotating bodies. Thus they cannot come into contact with the rotating bodies 6, 6', avoiding unwanted transfer of lubricating grease onto them.

The configurations shown in Fig. 2 and 3 are non-limitative examples of seals comprising means for the retention of lubricating grease.

The inward pointing rim and/or the projecting elements can constitute a functional portion of the part lending form stability, i.e. they give it form stability or contribute thereto, whereby they are preferably integrally made from plastic.

The seals shown in Figs. 4-7 possess a part 8 lending form stability and a sealing, elastic part 9.

In the seal 4 shown in Fig. 4 in axial cross-section, only the part 8 lending form stability comprises lubricant-retaining means, in the form of rims 12. The respective sealing, elastic parts 9 of the seals shown in Figs. 5 to 7 also comprise a lubricant-retaining means, rim 12'.

The seal in Fig. 5 comprises a circumferentially extending rim 12, where projecting elements with a radial part are distributed over the circumference, one of which is represented in this Fig.

Fig. 6 shows a variant of the seal 4 described in Fig. 5 whereby the projecting elements with radial part 13, distributed over the circumference, extend from a first rim 12a to a second rim 12b. As a result cavities 14 are formed.

The embodiment represented in Fig. 7 has a great lubricant-retaining capacity due to the presence and mounting of various lubricant-retaining means 12, 12', 13.

The means for the retention of lubricant can be formed of plastic, for instance by injection moulding. When a plastic seal or part thereof such as the part lending form stability is used, then it is very advantageous to fabricate the means and the seal integrally by injection moulding.

It goes without saying that numerous forms of seals with lubricant-retaining means are possible. The expert can easily arrive at an effective embodiment, taking into account the consistency of the grease at operating temperature. For thixotropic lubricants or those with low viscosity the number of lubricant-retaining means will be relatively large, while this number will be smaller for the viscous and less or non-thixotropic lubricants. Without any limitations regarding other types of bearings it is pointed out that the invention is very well suited for deep groove ball bearings. The seal in a bearing is preferably a static seal, as this contributes to the inability of the lubricant to loosen due to vibration. In that case fewer means are needed to retain the lubricant, leaving more room for the retention of lubricant.

If the cage 8 or a cage member is formed on the seal 4 or is connected to it, the lubricant-retaining means may project into the part of the space 5 of the rotating bodies 6, 6' within the circumferential projection, as the seal 4 then rotates with the rotating bodies 6, 6', and the lubricant retention means cannot come into contact with the rotating bodies 6, 6'. The invention covers the lubricant retention means formed at the cage 8 or a cage member.

## Claims

1. A bearing comprising an inner race ring (3) and an outer race ring (2), which race rings (2,3) are positioned concentric in relationship to each other, and wherein at least one of the race rings is in contact with a seal (4,4'), said seal (4,4'), together with the race rings (2,3) defining a space (5), rotating bodies (6,6') being provided within said space (5) between the race rings (2,3) and the space (5) in the bearing further being provided with oil-containing lubricating grease, **characterized** in that the seal (4,4') comprises means (12-15) projecting into said space for the retention of lubricating grease.

2. A bearing according to claim 1, **characterized** in that the means (12-15) for the retention of lubricating grease are formed of plastic.

3. A bearing according to claim 1 or 2, **characterized** in that the means (12-15) for the retention of lubricating grease only project into the part of the space (5) outside the circumferential projection of the rotating bodies (6,6').

4. A bearing according to claims 1 to 3, **characterized** in that the means (12-15) for the retention of lubricating grease comprise a rim (12,12') extending substantially circumferentially, which is discontinuous or continuous and pointing inward.

5. A bearing according to claims 1 to 4, **characterized** in that the means for the retention of lubricating grease comprise a number of projecting elements with a radial part (13) distributed circumferencially.

6. A bearing according to any of the preceding claims, **characterized** in that the rim (12) which is pointing inward and the projecting elements (13) together form cavities (14).

7. A bearing according to any of the preceding claims, whereby the seal (4,4') comprises a sealing, elastic part (9) and a part 8 lending form stability, **characterized** in that the rim (12) which is pointing inward and/or the projecting elements (13) are mounted on the part (8,8') lending form stability.

8. A bearing according to any of claims 1 to 6, **characterized** in that the rim (12) which is pointing inward and/or the projecting elements (13) constitute a functional portion of the part (8,8') lending form stability.

9. A bearing according to any of the preceding claims, **characterized** in that the means are provided with surface-enlarging structures (15,15').

10. A bearing according to any of the preceding claims, **characterized** in that the seal (4,4') with the means (12-15) for the retention of lubricating grease constitute a seal which during operation remains static.

11. A bearing according to any of the preceding claims, **characterized** in that the bearing (1) is a deep groove roller bearing.

12. A seal for use in a bearing with rotating bodies, **characterized** in that after mounting in the roller bearing (1), the seal (4,4') on a side facing the rotating bodies (6,6') is provided with projecting means (12-15) for the retention of lubricating grease.
